# EUROPEAN PATENT APPLICATION

(11) **EP 4 202 880 A1**
(43) Date of publication of application: **28.06.2023**
(21) Application number: 22201321.1
(22) Date of filing: 13.10.2022
(51) Int. Cl.: G07G 1/00, G07G 1/12, G06Q 20/20, G06V 20/00, G06V 20/52, G06V 40/20

(54) **INFORMATION PROCESSING PROGRAM, INFORMATION PROCESSING METHOD, AND INFORMATION PROCESSING APPARATUS**

(30) Priority: 24.12.2021 JP 2021210435
(71) Applicant: FUJITSU LIMITED, Kawasaki-shi, Kanagawa 211-8588 (JP)
(72) Inventor: Kohata, Shun, Kawasaki-shi, Kanagawa, 211-8588 (JP)
(74) Representative: Hoffmann Eitle

(57) **Abstract**

An information processing program causes a computer(10) to execute a process including, extracting a person from a video image in which a predetermined area in an inside of a store is captured,(S102) tracking the extracted person by analyzing the video image,(S103) specifying a behavior exhibited by the tracked person by inputting the video image into a trained machine learning model,(S104) specifying a first behavior type that is reached by the behavior exhibited by the tracked person from among a plurality of behavior types in each of which a transition of processes of the behaviors exhibited for a commodity product in the inside of the store is defined,(S105) and specifying, based on the first behavior type, when it is determined that the tracked person has moved to outside a predetermined area,(S106:Yes) whether the tracked person has purchased the commodity product or has left without purchasing the commodity product.(S107)

## Description

### FIELD

The embodiments discussed herein are related to an information processing program, an information processing method, and an information processing apparatus.

### BACKGROUND

Some efforts are being made to improve a conversion rate by analyzing what is called a purchasing behavior, that is, a behavior exhibited by a person who is visiting a retail store or the like when the person purchases a commodity product. For example, if, in a store that sells clothes, a person who compares commodity products less than five times is likely to purchase a commodity product, and, in contrast, a person who compares commodity products five times or more has is likely to leave without purchasing the commodity product, there is a possibility of improving the conversion rate by inducing the person to try on clothes less than five times at the time of providing a customer service.

Patent Document 1: Japanese Laid-open Patent Publication No. 2009-48430

However, it is not easy to analyze the purchasing behaviors exhibited by persons from various behaviors exhibited by various persons in an inside of a store.

Accordingly, it is an object in one aspect of an embodiment of the present invention to provide an information processing program, an information processing method, and an information processing apparatus capable of analyzing purchasing behaviors exhibited by persons with more accuracy.

### SUMMARY

According to an aspect of an embodiment, an information processing program causes a computer to execute a process including, extracting a person from a video image in which a predetermined area in an inside of a store is captured, tracking the extracted person by analyzing the video image, specifying a behavior exhibited by the tracked person in the inside of the store by inputting the video image into a trained machine learning model, specifying a first behavior type that is reached by the behavior exhibited by the tracked person from among a plurality of behavior types in each of which a transition of processes of the behaviors exhibited for a commodity product in the inside of the store is defined, determining whether or not the tracked person has moved to outside a predetermined area, and specifying, based on the first behavior type, when it is determined that the tracked person has moved to outside the predetermined area, whether the tracked person has purchased the commodity product or has left without purchasing the commodity product.

### BRIEF DESCRIPTION OF DRAWINGS

FIG. 1 is a diagram illustrating a configuration example of an information processing system according to a first embodiment;
FIG. 2 is a diagram illustrating a configuration example of an information processing apparatus 10 according to the first embodiment;
FIG. 3 is a diagram illustrating an example of information stored in a camera installation DB 14 according to the first embodiment;
FIG. 4 is a diagram illustrating an example of information stored in a commodity product DB 15 according to the first embodiment;
FIG. 5 is a diagram illustrating an example of information stored in a person DB 16 according to the first embodiment;
FIG. 6 is a diagram illustrating tracking of a customer;
FIG. 7 is a diagram illustrating an example of extraction and tracking of a person from an in-store image according to the first embodiment;
FIG. 8 is a diagram illustrating an example of skeleton information;
FIG. 9 is a diagram illustrating pose determination of the entire body;
FIG. 10 is a diagram illustrating detection of a motion of each of parts;
FIG. 11 is a diagram illustrating an example of designation of an ROI according to the first embodiment;
FIG. 12 is a diagram illustrating an example of a purchase psychological process;
FIG. 13 is a diagram illustrating a process of specifying a reached behavior type according to the first embodiment;
FIG. 14 is a diagram illustrating an example of determination of movement of a tracked person to the outside of an area according to the first embodiment;
FIG. 15 is a diagram illustrating an example of determination of purchase or leave of the tracked person according to the first embodiment;
FIG. 16 is a diagram illustrating an example of an image that indicates a proportion of leaving persons according to the first embodiment;
FIG. 17 is a diagram illustrating an example of storage for attribute information on a person according to the first embodiment;
FIG. 18 is a diagram illustrating an example of training of a detection model according to the first embodiment;
FIG. 19 is a diagram illustrating an example of group identification according to the first embodiment;
FIG. 20 is a flowchart illustrating the flow of a purchase/leave determination process according to the first embodiment; and
FIG. 21 is a diagram illustrating an example of a hardware configuration.

### DESCRIPTION OF EMBODIMENTS

Preferred embodiments of the present invention will be explained with reference to accompanying drawings. Furthermore, the present embodiment is not limited to the embodiments. In addition, each of the embodiments can be used in any appropriate combination as long as they do not conflict with each other.

### [a] First Embodiment

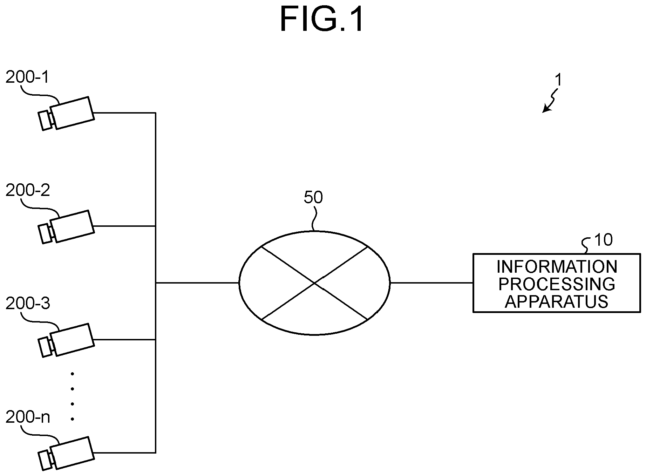

First, an information processing system for implementing the present embodiment will be described. FIG. 1 is a diagram illustrating a configuration example of an information processing system according to a first embodiment. As illustrated in FIG. 1, an information processing system 1 is a system in which the information processing apparatus 10, camera devices 200-1 to 200-n (n is any integer. Hereinafter, collectively referred to as a "camera device 200") are connected via a network 50 so as to be communicated with each other.

For the network 50, for example, various kinds of communication networks, such as an intranet, that is used in an inside of a store, such as a retail store, may be used irrespective of a wired or wireless manner. Furthermore, instead of a single network, the network 50 may be constituted of, for example, an intranet and the Internet by way of a network device, such as a gateway, or by way of another device (not illustrated). In addition, an expression of the "inside of a store" of a retail store or the like is not limited to indoors, but may include outdoors within the site of the retail store or the like.

The information processing apparatus 10 is an information processing apparatus, such as a desktop personal computer (PC), a notebook PC, or a server computer, that is installed, for example, inside of a store of a retail store and that is used by store staff, an administrator, or the like. Alternatively, the information processing apparatus 10 may be a cloud computer device managed by a service provider that provides a cloud computing service.

The information processing apparatus 10 receives, from the camera device 200, a plurality of images obtained by capturing, by the camera device 200, a predetermined image capturing range, such as each of selling sections or a checkout counter area, inside of the store, such as a retail store. Furthermore, the plurality of images mentioned here are, in a precise sense, video images captured by the camera device 200, that is, a series of frames of a moving image.

Furthermore, the information processing apparatus 10 uses an existing object detecting technique, extracts a customer who is visiting the store (hereinafter, sometimes simply referred to as a "person" or a "customer") from a video image captured by the camera device 200, and tracks the extracted person. Furthermore, the information processing apparatus 10 uses an existing skeleton detection technology, generates skeleton information on a person who has been tracked (hereinafter, sometimes simply referred to as a "tracked person"), estimates a pose or a motion of the tracked person by using an existing pose estimation technology or the like, and specifies a behavior exhibited by the tracked person.

Furthermore, the information processing apparatus 10 specifies a first behavior type that is reached by the behavior exhibited by the tracked person from among a plurality of behavior types in each of which a transition of processes of behaviors exhibited between a behavior of entering the inside of the store and a behavior of purchasing a commodity product in the inside of the store is defined. The processes of the behaviors and a process of specifying the reached first behavior type will be described in detail later, but a person who is present in the inside of a store may exhibit various behaviors, such as a behavior of entering the store, a behavior of looking at a commodity product, and a behavior of picking up, comparing, or purchasing a commodity product, so that the behavior types mentioned here are behavior types obtained by categorizing these behaviors by associating these behaviors with the processes. In addition, the information processing apparatus 10 specifies the first behavior type that is reached by the person by way of various behaviors.

Furthermore, the information processing apparatus 10 determines whether or not the tracked person has moved to the outside of a predetermined area, for example, to a checkout counter area. In addition, if the information processing apparatus 10 determines that the tracked person has moved to the outside of the area, the information processing apparatus 10 specifies, on the basis of the first behavior type, whether the tracked person has purchased a commodity product or has left without purchasing a commodity product.

Furthermore, in FIG. 1, the information processing apparatus 10 is illustrated as a single computer; however, the information processing apparatus 10 may be a distributed computing system constituted by a plurality of computers.

The camera devices 200 are, for example, monitoring cameras installed in each of the selling sections or the checkout counter area in the inside of a store, such as a retail store. The video image captured by the camera device 200 is transmitted to the information processing apparatus 10. In addition, position information, such as the coordinates, for specifying each of the commodity products and the selling section area is allocated to the respective commodity products and the selling section area captured by the camera device 200, and, for example, the information processing apparatus 10 is able to specify each of the commodity products and the selling section area from the video image received from the camera device 200.

### Functional configuration of information processing apparatus 10

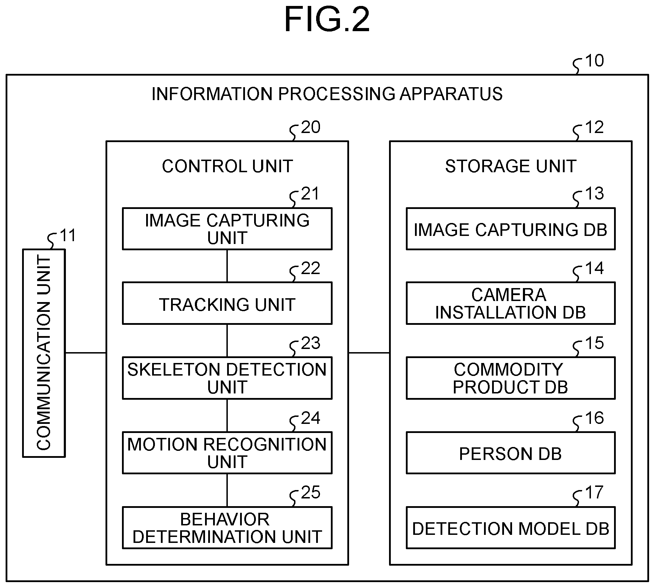

In the following, a functional configuration of the information processing apparatus 10 will be described. FIG. 2 is a diagram illustrating a configuration example of the information processing apparatus 10 according to the first embodiment. As illustrated in FIG. 2, the information processing apparatus 10 includes a communication unit 11, a storage unit 12, and a control unit 20.

The communication unit 11 is a processing unit that controls communication with another device, such as the camera device 200 and is a communication interface, such as a network interface card.

The storage unit 12 has a function for storing various kinds of data or programs executed by the control unit 20 and is implemented by, for example, a storage device, such as a memory or a hard disk. The storage unit 12 stores therein an image capturing DB 13, the camera installation DB 14, the commodity product DB 15, a person DB 16, a detection model DB 17, and the like. Furthermore, DB is an abbreviation of a database.

The image capturing DB 13 stores therein a plurality of captured images that are a series of frames captured by the camera device 200. Furthermore, the image capturing DB 13 is able to store therein the captured images by associating each of the captured images with the position information on each of the commodity products, a region of the selling section area, the coordinates for specifying an extracted person, or the like from each of the captured images. In addition, the image capturing DB 13 stores therein the skeleton information on the person who is extracted and specified from the captured image. Generation of the skeleton information will be described later.

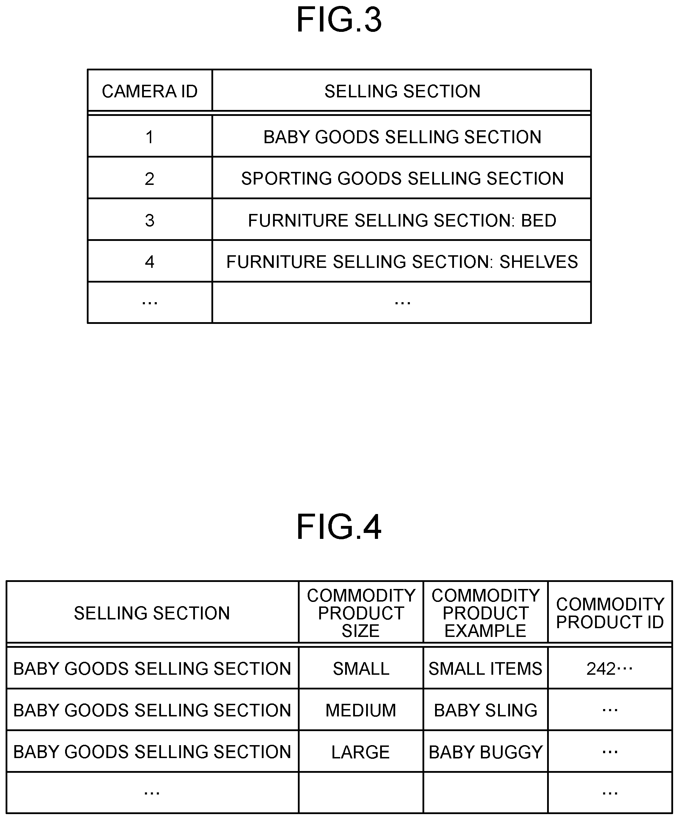

The camera installation DB 14 stores therein information for specifying the location in which each of the camera devices 200 is installed. The information stored here may be set in advance by an administrator or the like. FIG. 3 is a diagram illustrating an example of the information stored in the camera installation DB 14 according to the first embodiment. As illustrated in FIG. 3, the camera installation DB 14 stores therein, in an associated manner, each of the pieces of information on items, such as "a camera ID and a selling section". In the item of "camera ID" stored here, information for identifying a camera is set, and, in the item of "selling section", information for specifying a selling section in which a camera is installed is set. In the example illustrated in FIG. 3, an example in which a camera with a camera ID of 1 is installed in a baby goods selling section and a camera with a camera ID of 2 is installed in a sporting goods selling section is illustrated.

The commodity product DB 15 stores therein information on the commodity products that are displayed in each of the selling sections. The information stored here may be set in advance by an administrator or the like. FIG. 4 is a diagram illustrating the information stored in the commodity product DB 15 according to the first embodiment. As illustrated in FIG. 4, the commodity product DB 15 stores therein, in an associated manner, each of the pieces of information on items, such as "a selling section, a commodity product size, a commodity product example, and a commodity product ID". Information for specifying a selling section is set in the item of "selling section", information on the size of a commodity product is set in the item of "commodity product size", an example of a corresponding commodity product is set in the item of "commodity product example", and information for specifying a commodity product is set in the item of "commodity product ID". The example illustrated in FIG. 4 indicates that "242···" is set, as the commodity product ID, to a small items corresponding to commodity products with small sizes displayed in the baby goods selling section. Furthermore, the commodity product DB 15 may store therein position information, such as the coordinates, for specifying a selling section area of each of the commodity products or for specifying a commodity product. The information processing apparatus 10 is able to specify, on the basis of the position information, a selling section area of each of the commodity products or a commodity product from the video image received from the camera device 200.

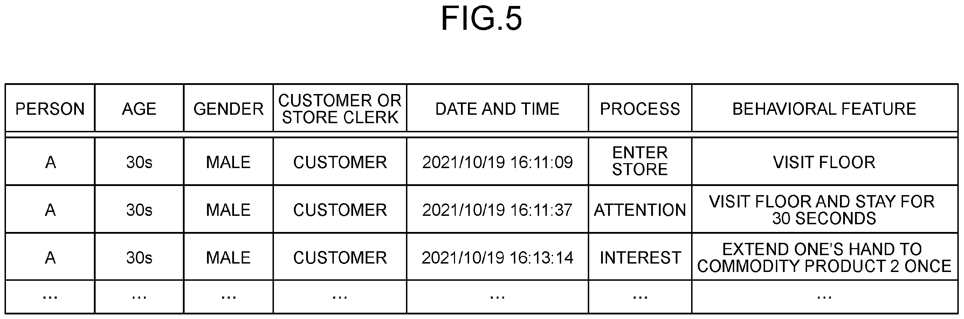

The person DB 16 stores therein information on a tracked person, such as a customer who is visiting the store or a store clerk. The information stored here is generated and set by the information processing apparatus 10 on the basis of the video image, the information, or the like received from the camera device 200. FIG. 5 is a diagram illustrating an example of the information that is stored in the person DB 16 according to the first embodiment. As illustrated in FIG. 5, the person DB 16 stores therein, in an associated manner, pieces of information on times, such as "a person ID, age, gender, a store clerk or a customer, date and time, a process, and a behavioral feature". In the item of "person" stored here, information for specifying a tracked person is set. Furthermore, in the items of "age", "gender", and "customer or store clerk", information on the age and the gender of the person and information whether the person is a customer or a store clerk that are specified by the information processing apparatus 10 on the basis of the video image, the information, or the like received from the camera device 200 are set, respectively. Furthermore, in the items of "date and time", "process", and "behavioral feature", the date and time at which a behavior type of a tracked person is specified by the information processing apparatus 10, the process of the specified behavior type, and the behavioral feature determined on the basis of the specified behavior type are set, respectively.

The detection model DB 17 stores therein information on a machine learning model for detecting a person who has left without purchasing a commodity product (hereinafter, sometimes referred to as a "leaving person"), and a model parameter for building the machine learning model. The machine learning model, that is, a detection model for a leaving person, is generated from machine learning performed by using behavioral features of a purchaser who has purchased a commodity product and a leaving person as feature values and by using the purchaser or the leaving person as a correct answer label. The detection model may be generated by the information processing apparatus 10 or may be generated and trained by another information processing apparatus.

Furthermore, the above described information stored in the storage unit 12 is only one example, and the storage unit 12 may store therein various kinds of information other than the above described information.

The control unit 20 is a processing unit that manages the entirety of the information processing apparatus 10 and is, for example, a processor or the like. The control unit 20 includes an image capturing unit 21, a tracking unit 22, a skeleton detection unit 23, a motion recognition unit 24, and a behavior determination unit 25. Furthermore, each of the processing units is an example of an electronic circuit included by the processor or an example of a process executed by the processor.

The image capturing unit 21 is a processing unit that captures an image. For example, the image capturing unit 21 receives image data on the image captured by the camera device 200, and then, stores the received image data in the image capturing DB 13.

The tracking unit 22 is a processing unit that acquires each of the pieces of image data captured in a period of time before the person who enters inside the store leaves the store. Specifically, the tracking unit 22 extracts the image data in which the person is captured from a plurality of pieces of image data, i.e., a plurality of frames, captured by the camera device 200 and specifies the person among the frames.

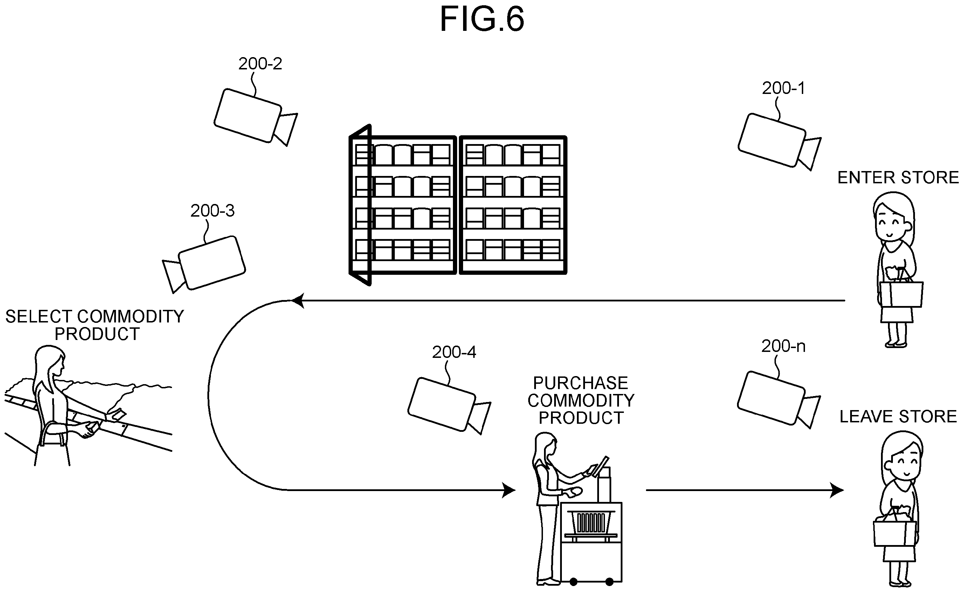

For example, the tracking unit 22 tracks a certain person in a period of time between a point at which the person enters inside of the store and at a point at which the person leaves the store, and acquires each of the pieces of image data on the person captured in the store. FIG. 6 is a diagram illustrating tracking of a customer. As illustrated in FIG. 6, the tracking unit 22 extracts a person from a plurality of pieces of image data captured by the camera devices 200 installed in various sites, such as an entrance of the store, each of the selling sections, a checkout counter area, or the exit of the store, of inside of the store, specifies the same person from the extracted persons, and performs tracking for each person.

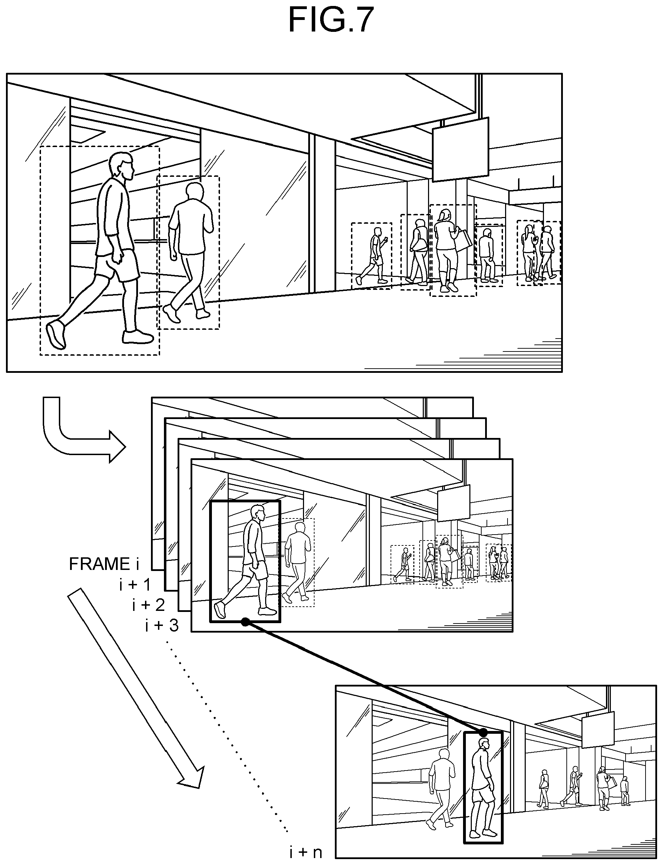

FIG. 7 is a diagram illustrating an example of extraction and tracking of a person from an in-store image according to the first embodiment. As illustrated in FIG. 7, the tracking unit 22 extracts a person from the in-store image by using, for example, an existing detection algorithm, such as YOU Only Look Once (YOLO), Single Shot Multibox Detector (SSD), or Region Based Convolutional Neural Networks (RCNN). The in-store image is each of the pieces of image data captured by the camera device 200, and, as illustrated in FIG. 7, the extracted person is indicated by a bounding box (BBOX) that encloses the subject region in the image by a rectangular box.

Furthermore, as indicated on the upper part illustrated in FIG. 7, it is, of course, conceivable that a plurality of persons are extracted from the in-store image. Accordingly, as indicated on the lower part illustrated in FIG. 7, for example, the tracking unit 22 specifies the same person among the frames on the basis of the plurality of pieces of image data, i.e., the degree of similarity of the BBOXes of the person among the plurality of frames. Regarding the process of specifying the same person, for example, an existing tracking algorithm, such as Tracking Learning Detection (TLD) or Kernelized Correlation Filters (KCF), may be used.

The skeleton detection unit 23 acquires skeleton information on the person who appears in the image data. Specifically, the skeleton detection unit 23 performs skeleton detection on the person with respect to the image data in which each of the persons extracted by the tracking unit 22 appears.

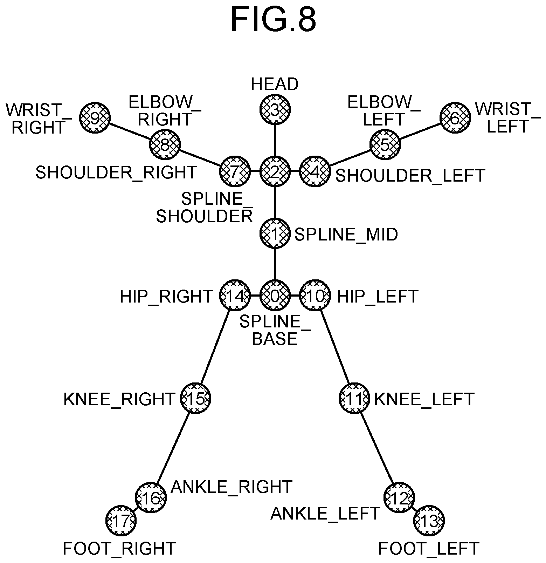

For example, the skeleton detection unit 23 acquires the skeleton information by inputting the image data on the extracted person, i.e., a BBOX image that indicates the extracted person, to a trained machine learning model that has been built by using an existing algorithm, such as DeepPose or OpenPose. FIG. 8 is a diagram illustrating an example of the skeleton information. It is possible to use, for the skeleton information, 18 pieces (number 0 to number 17) of definition information that are obtained by numbering each of joints specified by a known skeleton model. For example, a right shoulder joint (SHOULDER_RIGHT) is indicated by number 7, a left elbow joint (ELBOW_LEFT)is indicated by number 5, a left knee joint (KNEE_LEFT) is indicated by number 11, and a right hip joint (HIP_RIGHT) is indicated by number 14. Therefore, it is possible to acquire 18 pieces of coordinate information on the skeleton illustrated in FIG. 8 from the image data, and, for example, "the X coordinates=X7, the Y coordinates=Y7, and the Z coordinates=Z7" are acquired as the position of the right shoulder joint indicated by number 7. Furthermore, for example, the Z-axis may be defined as a distance direction from the image capturing device to the target, the Y-axis may be defined as a height direction perpendicular to the Z-axis, and the X-axis may be defined as a horizontal direction.

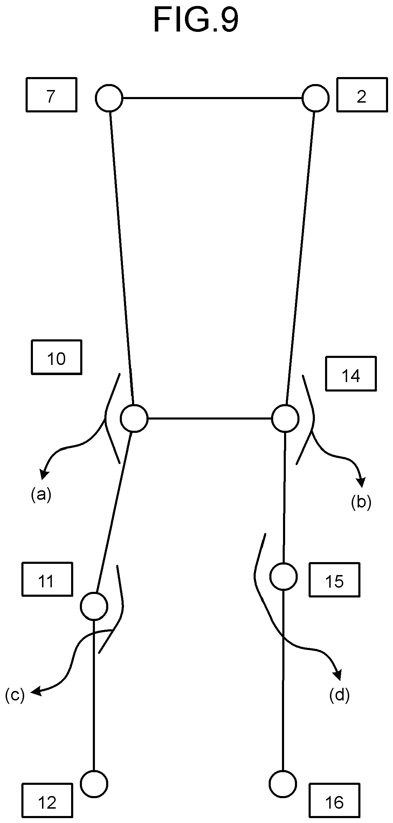

Furthermore, the skeleton detection unit 23 is able to determine, by using a machine learning model in which patterns of the skeletons are trained in advance, a pose of the entire body, such as a pose of standing up, walking, squatting down, sitting down and lying down. For example, the skeleton detection unit 23 is able to determine the most similar pose of the entire body by using a machine learning model that is obtained by training, by using Multilayer Perceptron, an angle formed between one of joints and the other joint that are defined as the skeleton information illustrated in FIG. 8 or a fine play drawing. FIG. 9 is a diagram illustrating pose determination performed on the entire body. As illustrated in FIG. 9, the skeleton detection unit 23 is able to detect a pose of the entire body by acquiring an angle (a) formed between a joint of "HIP_LEFT" indicated by number 10 and the joint of "KNEE_LEFT" indicated by number 11, an angle (b) formed between the joint of "HIP_RIGHT" indicated by number 14 and a joint of "KNEE_RIGHT" indicated by number 15, an angle (c) of the joint of "KNEE_LEFT" indicated by number 11, an angle (d) of a joint of "KNEE_RIGHT" indicated by number 15, or the like.

Furthermore, the skeleton detection unit 23 is able to detect a motion of each part category by performing the pose determination on the parts on the basis of a 3D joint pose of a human body. Specifically, the skeleton detection unit 23 is also able to perform coordinate transformation from 2D joint coordinates to 3D joint coordinates by using an existing algorithm, such as a 3D-baseline method.

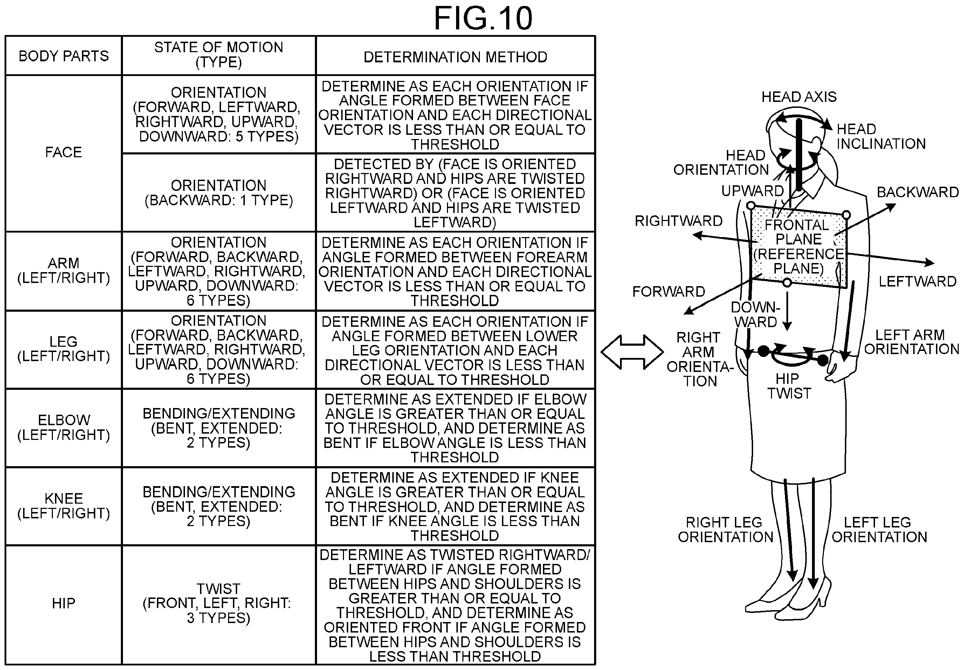

FIG. 10 is a diagram illustrating detection of a motion of each of the parts. As illustrated in FIG. 10, regarding the part "face", the skeleton detection unit 23 is able to detect whether the face is oriented forward, leftward, rightward, upward, and downward (five types) on the basis of whether or not the angle formed between the face orientation and each of the directional vectors is equal to or less than a threshold. Furthermore, the skeleton detection unit 23 specifies the orientation of the face on the basis of the vector that is defined on condition that "the starting point is a midpoint of both ears and the end point is a nose". Furthermore, the skeleton detection unit 23 is able to detect whether or not the face is oriented backward on the basis of whether "the face is oriented rightward and the hips are twisted rightward" or "the face is oriented leftward and the hips are twisted leftward".

Regarding the part "arm", the skeleton detection unit 23 is able to detect whether each of the left and right arms is oriented forward, backward, leftward, rightward, upward, and downward (six types) on the basis of whether or not the angle formed between the forearm orientation and each of the directional vectors is equal to or less than a threshold. Furthermore, the skeleton detection unit 23 is able to detect the orientation of the arm on the basis of the vector that is defined on condition that "the starting point is an elbow and the end point is a wrist".

Regarding the part "leg", the skeleton detection unit 23 is able to detect whether each of the left and right legs is oriented forward, backward, leftward, rightward, upward, and downward (six types) on the basis of whether or not the angle formed between the lower leg orientation and each of the directional vectors is equal to or less than a threshold. Furthermore, the skeleton detection unit 23 is able to detect the orientation of the lower leg on the basis of the vector that is defined on condition that "the starting point is a knee and the end point is an ankle".

Regarding the part "elbow", the skeleton detection unit 23 is able to detect that the elbow is extended if the angle of the elbow is equal to or greater than a threshold and detect that the elbow is bent if the angle of the elbow is less than the threshold (2 types). Furthermore, the skeleton detection unit 23 is able to detect the angle of the elbow on the basis of the angle formed by a vector A that is defined on condition that "the starting point is an elbow and the end point is a shoulder" and a vector B that is defined on condition that "the starting point is an elbow and the end point is a wrist".

Regarding the part "knee", the skeleton detection unit 23 is able to detect that the knee is extended when the angle of the knee is equal to or greater than a threshold and detect that the knee is bent when the angle of the knee is less than the threshold (2 types). Furthermore, the skeleton detection unit 23 is able to detect the angle of the knee on the basis of the angle formed by a vector A that is defined on condition that "the starting point is a knee and the end point is an ankle" and a vector B that is defined on condition that "the starting point is a knee and the end point is a hip".

Regarding the part "hips", the skeleton detection unit 23 is able to detect a left twist and a right twist (two types) on the basis of whether or not the angle formed between each of the hips and the shoulders is equal to or greater than a threshold, and is able to detect a forward facing state is the angle formed between each of the hips and the shoulders is less than the threshold. Furthermore, the skeleton detection unit 23 is able to detect the angle formed between each of the hips and the shoulders on the basis of the rotation angle of each of a vector A that is defined on condition that "the starting point is a left shoulder and the end point is a right shoulder" and a vector B that is defined on condition that "the starting point is a left hip (hip (L)) and the end point is a right hip (hip (R))", around the axis vector C that is defined on condition that "the starting point is a midpoint of both hips and the end point is a midpoint of both shoulders".

A description will be given here by referring back to FIG. 2. The motion recognition unit 24 is a processing unit that recognizes a motion performed by a person on the basis of a detection result of the skeleton information obtained by the skeleton detection unit 23. Specifically, the motion recognition unit 24 specifies a behavior including at least one motion on the basis of a transition of skeleton information recognized for each of a plurality of consecutive frames.

For example, if a skeleton representing a face looking at the front that is determined on the basis of part category determination and a skeleton standing up that is determined on the basis of the pose determination of the entire body are consecutively detected among several frames, the motion recognition unit 24 recognizes a motion of "looking at the front for a certain period of time". Furthermore, if a skeleton in which a variation in the pose of the entire body is less than a predetermined value is consecutively detected among several frames, the motion recognition unit 24 recognizes a motion of "unmoving".

Furthermore, if a skeleton in which the angle of the elbow is changed by an amount equal to or greater than a threshold is detected among several frames, the motion recognition unit 24 recognizes a motion of "moving one hand forward" or a motion of "extending one arm", and, if a skeleton in which the angle of the elbow is changed by an amount equal to or greater than the threshold and then the angle of the elbow becomes less than the threshold is detected among several frames, the motion recognition unit 24 recognizes a motion of "bending one hand". In addition, if a skeleton in which the angle of the elbow is changed by an amount equal to or greater than the threshold and then the angle of the elbow becomes less than the threshold is detected and after that this angle is continued among several frames, the motion recognition unit 24 recognizes a motion of "looking at one hand".

Furthermore, if a skeleton in which the angle of the wrist is consecutively changed is detected among several frames, the motion recognition unit 24 recognizes a motion of "the wrist coordinates frequently moving for a certain period of time". If a skeleton in which the angle of the wrist is consecutively changed and the angle of the elbow is consecutively changed is detected among several frames, the motion recognition unit 24 recognizes a motion of "the elbow coordinates and the wrist coordinates frequently moving for a certain period of time". If a skeleton in which each of the angle of the wrist, the angle of the elbow, and the orientation of the entire body are consecutively changed is detected among several frames, the motion recognition unit 24 recognizes a motion of "a frequent change in the orientation of the body and the entire body motion for a certain period of time".

Furthermore, the motion recognition unit 24 specifies a commodity product or a selling section area in the image data in which a person, a commodity product, and a selling section area of the commodity product appear on the basis of, for example, an image capturing region of each of the camera devices 200 and the coordinates of each of the commodity products and the coordinates of the selling section area of each of the commodity products in the image capturing region.

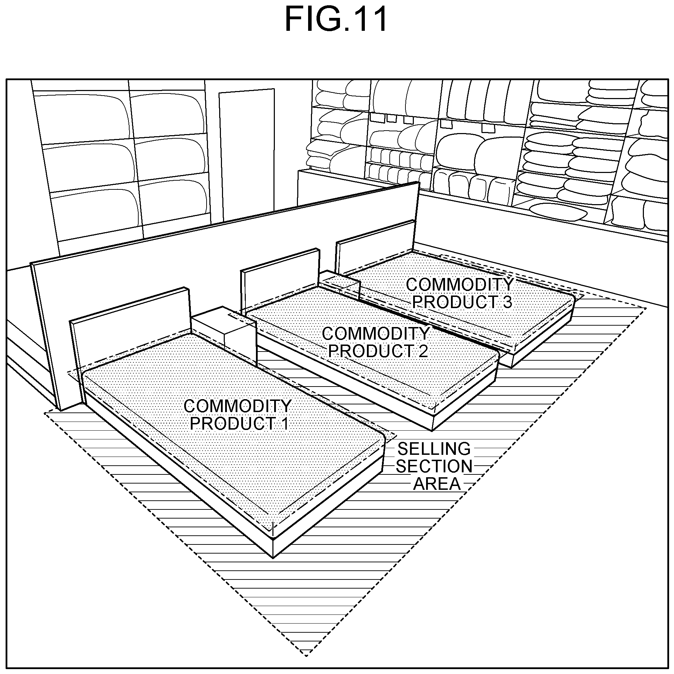

FIG. 11 is a diagram illustrating an example of designation of an ROI according to the first embodiment. As illustrated in FIG. 11, by designating, in advance, a region (region of interest: ROI) of each of the commodity products and a selling section area that are included in the image capturing region of the camera device 200, the motion recognition unit 24 is able to specify the commodity products and the selling section area from the image data. Then, the motion recognition unit 24 is able to specify, on the basis of a correlation between the ROI in each of the pieces of image data and a behavior exhibited by a tracked person, a purchasing behavior exhibited by the tracked person, such as a behavior of, for example, the tracked person entering a selling section area, staying on a floor, extending the hand to a commodity product 1, sitting down or lying down a commodity product 3.

Furthermore, the motion recognition unit 24 specifies a first behavior type that is reached by a behavior exhibited by the tracked person from among a plurality of behavior types in each of which a transition of processes of the behaviors exhibited between a behavior of entering the inside of the store and a behavior of purchasing a commodity product in the inside of the store is defined.

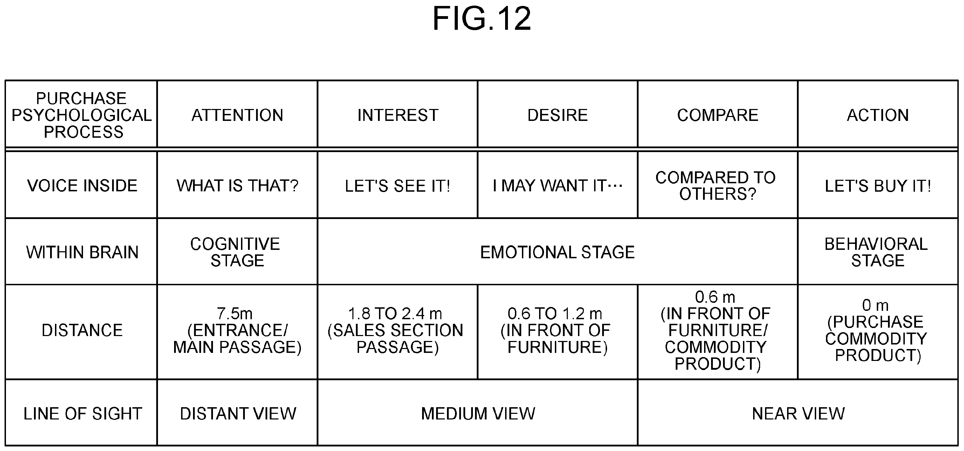

FIG. 12 is a diagram illustrating an example of a purchase psychological process. FIG. 12 is a table of an AIDeCA model indicating a summary of a purchase psychological process of a customer. Specifically, for example, if a customer A visits the store and finds a banner or a poster displayed in a selling section area, the purchase psychological process is transitioned to "Attention". Then, if the customer A finds a poster that introduces a commodity product X that is a favorite of the customer A, the purchase psychological process is transitioned to "Interest". Furthermore, the customer A immediately picks up the commodity product X and checks details, a price, or the like of the commodity product X. At this time, the purchase psychological process is transitioned to "Desire". In addition, if the customer A recalls a commodity product Y that is a commodity product similar to the commodity product X and that the customer A purchased the other day, and then, if the customer A compares the commodity product X to the commodity product Y, the purchase psychological process is transitioned to "Compare". Then, as a result of the comparison, if the customer A is satisfied with the commodity product X and put the commodity product X in a shopping basket, the purchase psychological process is transitioned to "Action". The purchase psychological process illustrated in FIG. 12 is only one example and, in this way, a customer exhibits the behavior associated with the purchase psychological process illustrated in FIG. 12 and reaches some sort of behavior before the customer A leaves the store. The motion recognition unit 24 uses a type of the behavior to be reached as the first behavior type, specifies which behavior the customer has reached, and specifies a purchasing behavior process that is associated with the behavior reached by the customer.

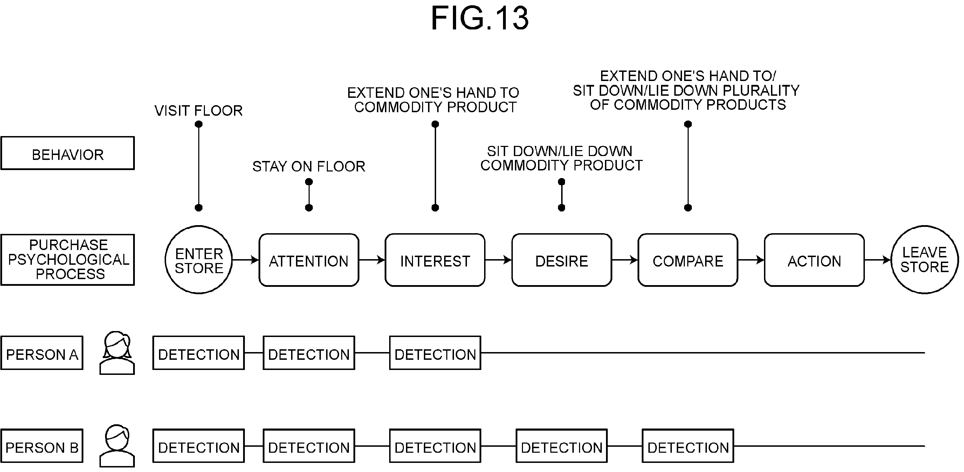

FIG. 13 is a diagram illustrating a process of specifying a reached behavior type according to the first embodiment. The motion recognition unit 24 detects each of the behaviors performed by the tracked person and specifies the reached behavior type and the purchase psychological process.

The example illustrated in FIG. 13 indicates that, regarding the person A, each of the behavior of visiting a certain floor, the behavior of staying on the floor for a while, and the behavior of extending the hand to the commodity product placed on the floor has been specified and detected by the motion recognition unit 24. In this case, the behavior type reached by the person A is, as illustrated in FIG. 13, "extending one's hand to a commodity product", and the reached purchase psychological process is "Interest" that is associated with "extending one's hand to a commodity product". Similarly, the behavior type reached by the person B is, as illustrated in FIG. 13, "extending one's hand to/sitting down/lying down a plurality of commodity products", and the reached purchase psychological process is "Compare". Furthermore, each of the behavior types associated with the purchase psychological process illustrated in FIG. 13 is only one example and is not limited to this example.

Furthermore, in the example illustrated in FIG. 13, a behavior associated with leave the store is not detected with respect to both of the persons A and B, so that it is indicated that the persons A and B are still staying in the area of the floor. Accordingly, for example, the information processing apparatus 10 continues to track the persons A and B until detecting behaviors associated with leave the store, and specifies the reached behavior type and the purchase psychological process. In addition, in the example illustrated in FIG. 13, the purchase psychological process of each of the persons A and B is sequentially detected and indicated from the left, but a part of the purchase psychological process may be skipped in the detection process. For example, if a person enters the floor, immediately finds a desired commodity product, and tries on the commodity product, in some cases, the behavior associated with "Attention" or "Interest" indicated by the purchase psychological process is not detected.

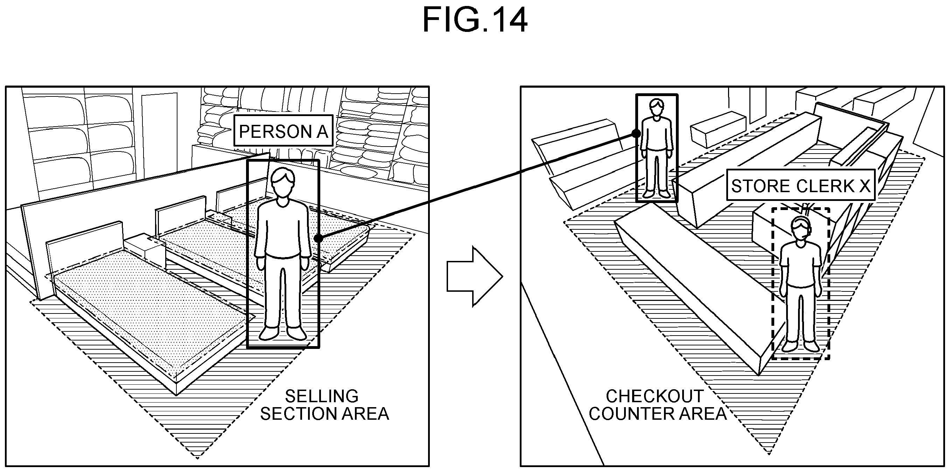

A description will be given here by referring back to FIG. 2. The behavior determination unit 25 determines whether or not the tracked person has moved to the outside of a predetermined area. Here, for example, the predetermined area is each of the selling section area, and a movement to the outside of the predetermined area is a movement to a checkout counter area. However, the outside of the predetermined area may be a different area, such as an exit area or an area outside the store. FIG. 14 is a diagram illustrating an example of determination of a movement of the tracked person to the outside of the area according to the first embodiment.

As illustrated in FIG. 14, for example, the behavior determination unit 25 determines whether or not the person A specified in a selling section area has left the selling section area and moved to the checkout counter area. More specifically, if it is determined that the person who is specified in a checkout counter area is the same person as the person A who is specified in the selling section area, the behavior determination unit 25 determines that the person A has moved to the outside of the area. Furthermore, at this time, it may be possible to set a time limit, and if it is determined that, for example, the person A is the same person as the person who is specified in the checkout counter area within 10 minutes after the person A has left the selling section area, it may be possible to determine that the person A has moved to the outside of the area.

In addition, regarding the determination of the same person, for example, it may be possible to build, by performing deep learning, a machine learning model in which a BBOX image of a person is input and a feature value vector of the person indicated by the BBOX is output, and determine the identity of the person on the basis of similarity evaluation conducted on the feature value. Furthermore, as indicated on the right side of FIG. 14, there may also be a case in which a person who is other than a customer, such as a store clerk, is extracted from the image data. Due to this, store clerk information, such as a BBOX image of each of the store clerks, is registered in advance, and, if it is determined that a person who is specified in each of the areas is the same person as the store clerk, the information processing apparatus 10 is able to exclude a processing target for the tracking.

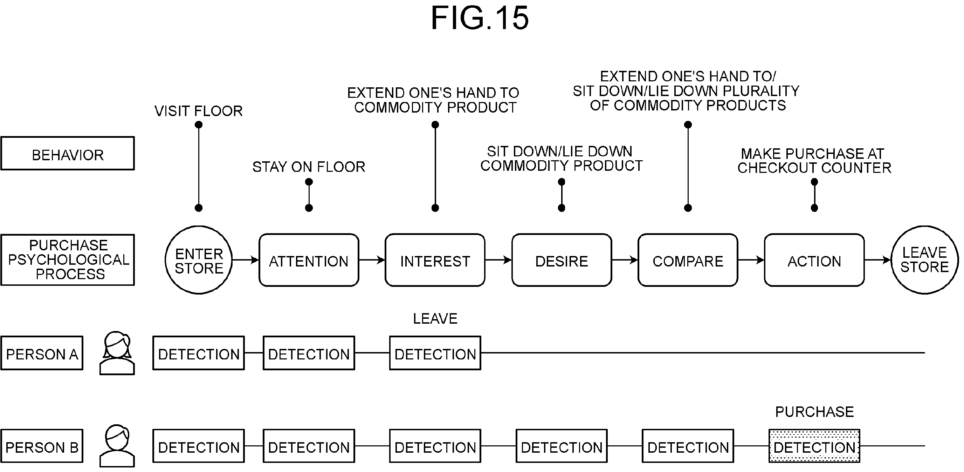

Then, if it is determined that the tracked person has moved to the outside of the area, the behavior determination unit 25 specifies whether the tracked person has purchased a commodity product or left without purchasing a commodity product. FIG. 15 is a diagram illustrating an example of determination of a purchase or leaving of the tracked person according to the first embodiment. The example illustrated in FIG. 15 is chronologically continued from the example illustrated in FIG. 13.

As illustrated in FIG. 15, for example, if it is determined that the person A has moved to the outside of the area, the behavior type reached by the person A is "extending one's hand to a commodity product" that is associated with the purchase psychological process of "Interest", so that the behavior determination unit 25 specifies that the person A has left without purchasing the commodity product. In contrast, for example, if it is determined that the person B has moved to the outside of the area, the behavior type reached by the person A is "a purchase at a checkout counter" that is associated with the purchase psychological process of "Action", so that the behavior determination unit 25 specifies that the person B has purchased the commodity product.

Furthermore, if it is determined that the person who has been specified in the selling section area has simply moved to the checkout counter area, the behavior determination unit 25 may specify that the person has purchased the commodity product. In contrast, if it is not determined that the person has moved to the checkout counter area, or if it is not determined that the person has moved to the checkout counter area within a predetermined period of time after leaving from the selling section area, the behavior determination unit 25 may specify that the person has left without purchasing the commodity product.

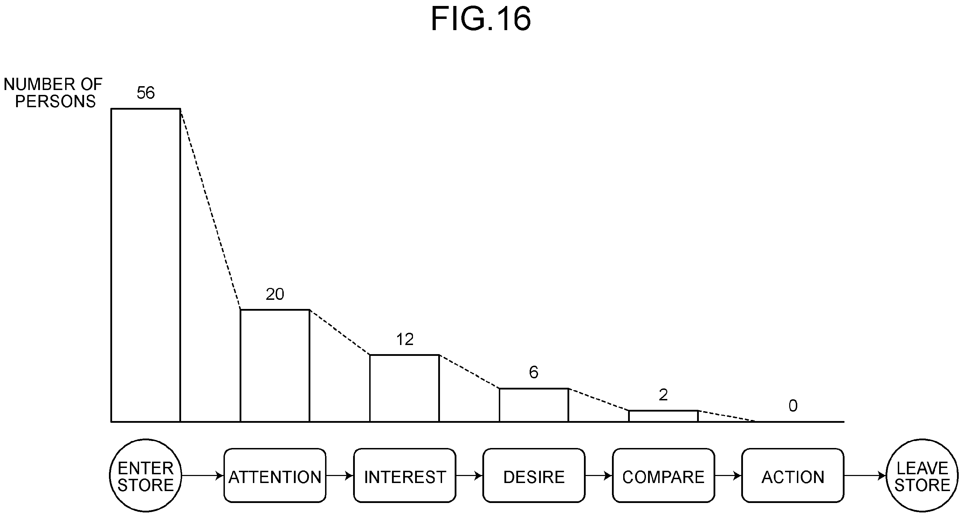

In addition, the information processing apparatus 10 is able to some processes described below in order to improve a conversion rate or the like by analyzing a purchasing behavior exhibited by a customer. For example, the information processing apparatus 10 is able to generate a graph or the like indicating a rate of leaving persons for each of the purchasing behavior processes reached by the respective leaving persons. FIG. 16 is a diagram illustrating an example of images of the rates of the leaving persons according to the first embodiment. As illustrated in FIG. 16, it is possible to analyze the purchasing behaviors of the customers by accumulating and visualizing the leaving persons for each purchasing behavior processes reached by the respective leaving persons, and it is possible to make efficient use of the obtained data to improve the conversion rate or the like. The purchasing behavior process is changed in the order of a first behavior process (Attention) that indicates attention and notice, a second behavior process (Interest) that indicates interest and curiosity, a third behavior process (Desire) that indicates a desire, a fourth behavior process (Compare) that indicates a comparison, a fifth behavior process (Action) that indicates a behavior.

If a person is situated in the first behavior process from among the plurality of behavior types in each of which a transition of processes of behaviors is defined, the behavior determination unit 25 determines whether or not the person exhibits a behavior (for example, extending one's hand to a commodity product) that is associated with the second behavior process that is the transition destination of the first behavior process. If it is determined that the person has exhibited the behavior that is associated with the second behavior process, the behavior determination unit 25 determines that the person has transitioned to the second behavior process.

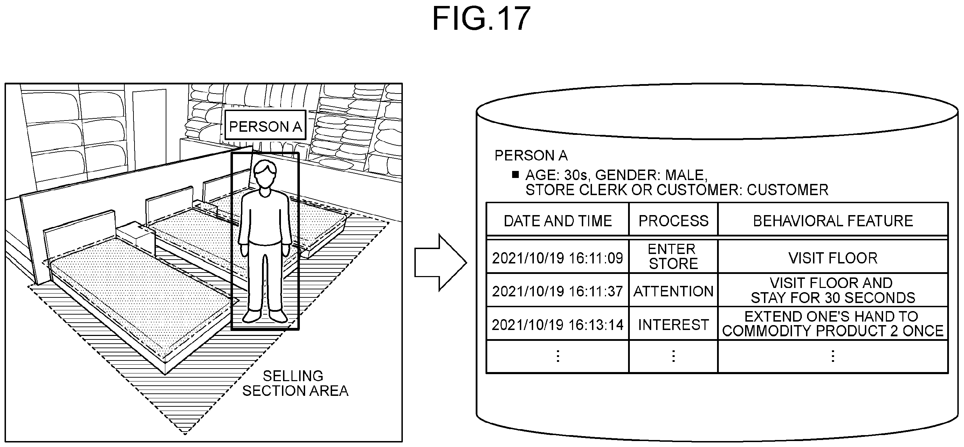

In addition, the information processing apparatus 10 is able to store, in an associated manner, the purchasing behavior process that has been reached by the person who has been specified in the selling section area and attribute information on the person. FIG. 17 is a diagram illustrating an example of stored attribute information on a person according to the first embodiment. As illustrated in FIG. 17, the information processing apparatus 10 chronologically accumulates data on a person in the order of detection of the purchasing behavior processes reached by the person who has been specified in the selling section area, and stores the accumulated data in the person DB 16 or the like by associating the accumulated data with the attribute information on the person. As a result, it is possible to make efficient use of the obtained data to conduct the behavior analysis of a leaving person in the case where the corresponding person has ended up being a leaving person. In addition, the example illustrated in FIG. 17 indicates, as the attribute information on the person, information indicating age, gender, a store clerk or a customer; however, the information is not limited to this example, and it may be possible to include information on an accompanying person or the like.

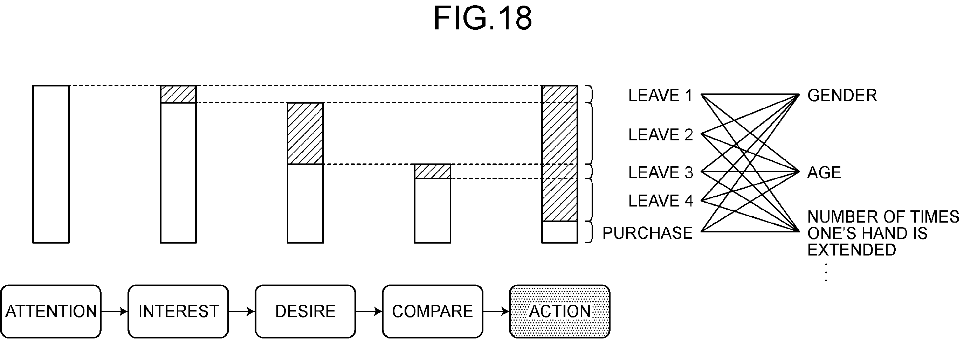

Furthermore, the information processing apparatus 10 is able to generate a detection model for detecting a leaving person. FIG. 18 is a diagram illustrating an example of training of a detection model according to the first embodiment. As illustrated in FIG. 18, the information processing apparatus 10 is able to generate a detection model that is used to detect a leaving person by training a machine learning model by using a purchasing behavioral feature of each of purchasers and leaving persons with respect to a commodity product as training data. In addition, for example, the purchasing behavioral feature may include the attribute information on age, gender, or the like on the person as well as the behavior type or the purchasing behavior process that is reached by the person detected by the information processing apparatus 10. By inputting the behavior or the attribute information on the person who has been specified in the selling section area to the detection model that has been generated as described above, it is possible to estimate whether the person has finally ended up being a purchaser or a leaving person and make efficient use of the detection model to improve the conversion rate or the like.

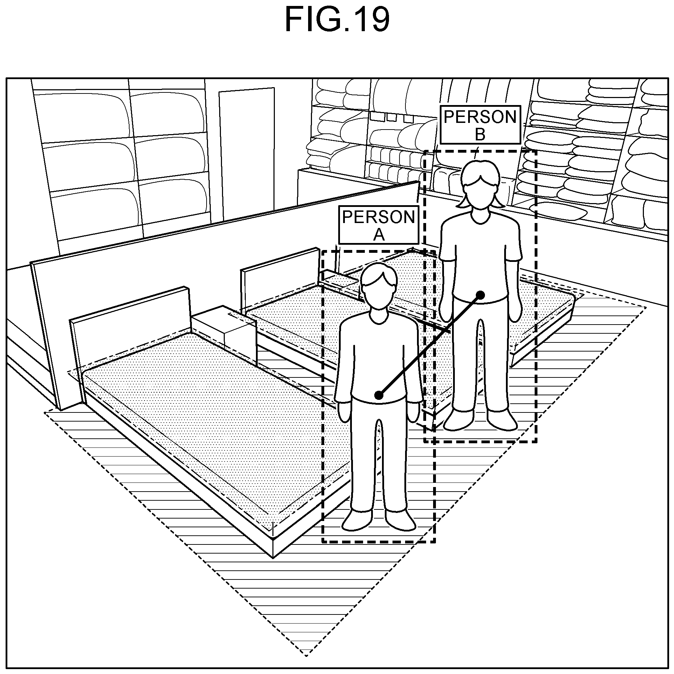

Furthermore, the information processing apparatus 10 is able to specify a group between the persons who visit the store. FIG. 19 is a diagram illustrating group identification according to the first embodiment. The information processing apparatus 10 is able to specify a group between the persons on the basis of a distance between a plurality of persons who have been specified in the selling section area. More specifically, for example, as illustrated in FIG. 19, the information processing apparatus 10 is able to calculate a temporal change in the distance between the BBOXes of the plurality of persons extracted from the image data, and is able to specify that the plurality of persons who are present within a predetermined distance in a predetermined period of time are the persons who belong to the same group. Then, the information on the plurality of persons belonging to the same group is stored, as information on an accompanying person associated with each of the persons, in the attribute information on the persons by the information processing apparatus 10.

### Flow of processes

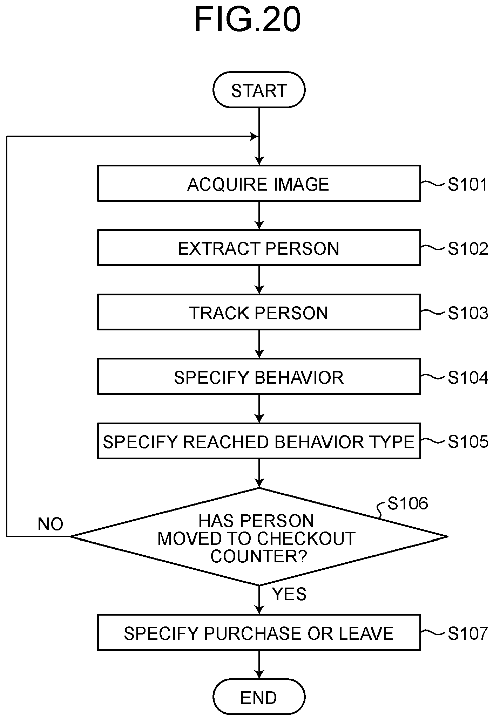

In the following, the flow of purchase/leave determination process performed by the information processing apparatus 10 will be described. FIG. 20 is a flowchart illustrating the flow of a purchase/leave determination process according to the first embodiment. The purchase/leave determination process illustrated in FIG. 20 is a process of specifying a behavior exhibited by the person, who appears in the video image of the inside of the store, of purchasing a commodity product or leaving without purchasing a commodity product. The purchase/leave determination process illustrated in FIG. 20 may be performed, for example, in each certain period of time, or every time a captured image is received from the camera device 200.

First, as illustrated in FIG. 20, the information processing apparatus 10 acquires, from the image capturing DB 13, a captured image in which a predetermined image capturing range of the inside of a store, such as a retail store, that has been captured by the camera device 200 (Step S101). Furthermore, in the purchase/leave determination process illustrated in FIG. 20, the captured image, in a precise sense, a monitoring video image, that has been captured by the camera device 200 is processed almost in real time, so that the captured images are transmitted from the camera device 200 as needed, and are stored in the image capturing DB 13.

Then, the information processing apparatus 10 uses an existing object detection technology and extracts a person from the captured image acquired at Step S101 (Step S102). Furthermore, regarding the process of extracting the person, it is, of course, conceivable that a plurality of persons are extracted from the captured image, that is, a single frame of the video image that has been captured by the camera device 200. Accordingly, the process at Step S103 and the subsequent processes are performed on each of the extracted persons.

Then, the information processing apparatus 10 tracks the person extracted at Step S102 (Step S103). Tracking of the person is performed on each of the persons by specifying the same person by using an existing technology on the person extracted from a plurality of frames of the video image captured by the camera device 200. As a result, as the flow of the processes, in a precise sense, tracking of the person is performed by repeatedly performing the processes at Steps S101 to S103. In addition, a person, such as a store clerk, who is not targeted for the tracking is also included in the person to be extracted at Step S102. Therefore, by registering the store clerk information, such as a BBOX image of each of the store clerks, in the information processing apparatus 10 in advance, it is possible to perform control such that tracking of the person who has been specified to be the same person as the store clerk is not performed.

Then, the information processing apparatus 10 specifies the behavior exhibited by the tracked person (Step S104). More specifically, for example, the information processing apparatus 10 specifies a behavior including a motion made by the person by using an existing technology, acquiring the skeleton information on the person from the captured images that are consecutively captured, and determining the pose made by the person. Furthermore, the information processing apparatus 10 uses the ROI that is set in advance to each of the commodity products or a selling section area included in the image capturing region of the camera device 200, specifies a commodity product or a selling section area included in the captured image, and performs determination in combination with the motion exhibited by the person, so that the information processing apparatus 10 specifies more detailed behavior exhibited by the person with respect to the commodity product or the selling section area.

Then, the information processing apparatus 10 specifies the behavior type reached by the behavior exhibited by the tracked person (Step S105). The behavior type specified here is the type of the behavior that is associated with the purchase psychological process described above with reference to FIG. 13 or FIG. 15.

Then, the information processing apparatus 10 determines whether or not the tracked person has moved to the checkout counter area (Step S106). The determination whether or not the tracked person has moved to the checkout counter area is performed by determining whether or not the person extracted from the captured image of the checkout counter area is the person who has been specified in the selling section area, that is, the same person as the tracked person. Furthermore, as described above, it may be possible to determine that the person has moved to the checkout counter area in the case where a time limit is set and it is determined that, for example, the person is the same person as the person who has been specified in the checkout counter area within a predetermined period of time after the person has left the selling section area. In addition, in the example illustrated in FIG. 20, the determination is performed on the basis of a movement to the checkout counter area, however; the example is not limited to this and another different predetermined area, such as an exit area or an area outside the store, may also be used for the determination. If it is determined that the tracked person is not moved to the checkout counter area (No at Step S106), the process returns to Step S101, and tracking of a person is continuously performed.

In contrast, if it is determined that the tracked person has moved to the checkout counter area (Yes at Step S106), the information processing apparatus 10 specifies whether the tracked person has purchased a commodity product or left without purchasing a commodity product (Step S107). Regarding the purchase/leave specifying process, for example, if the behavior type that is finally reached and that is specified at Step S105 is the behavior that is associated with the purchase psychological process of "Action", the information processing apparatus 10 is able to specify that the tracked person has purchased a commodity product. Alternatively, if it is determined that the tracked person has simply moved to the checkout counter area (Yes at Step S106), the information processing apparatus 10 may specify that the tracked person has purchased a commodity product. In contrast, if the behavior type that is finally reached and that is specified at Step S105 is the behavior that is associated with the purchase psychological process other than "Action", the information processing apparatus 10 may specify that the tracked person has left without purchasing a commodity product. Alternatively, if the person is not specified in the checkout counter area within a predetermined period of time after the person has left the selling section area, the information processing apparatus 10 may specify that the tracked person has left without purchasing a commodity product. After the process at Step S107 has been performed, the purchase/leave determination process illustrated in FIG. 20 is ended.

### Effects

As described above, the information processing apparatus 10 extracts a person from a video image in which a predetermined area in an inside of a store is captured, tracks the extracted person, specifies a behavior exhibited by the tracked person in the inside of the store, specifies a first behavior type that is reached by the behavior exhibited by the tracked person from among a plurality of behavior types in each of which a transition of processes of the behaviors exhibited between a behavior of entering the inside of the store and a behavior of purchasing a commodity product in the inside of the store is defined, determines whether or not the tracked person has moved to outside a predetermined area, and specifies, based on the first behavior type, when it is determined that the tracked person has moved to outside the area, whether the tracked person has purchased the commodity product or has left without purchasing the commodity product.

In this way, the information processing apparatus 10 specifies the behavior type that is finally reached by the person who is captured inside the store, and specifies whether the person has purchased the commodity product or has left without purchasing a commodity product. As a result, it is possible to analyze a purchasing behavior exhibited by the person with more accuracy on the basis of the pieces of specified information.

Furthermore, the information processing apparatus 10 determines, when the person is situated in a first behavior process from among the plurality of behavior types in each of which the transition of the processes of the behaviors is defined, whether or not the person exhibits a behavior associated with a second behavior process that is a transition destination of the first behavior process, and determines, when it is determined that the person has exhibited the behavior associated with the second behavior process, that the person has transitioned to the second behavior process.

As a result, it is possible to analyze a purchasing behavior exhibited by the person with more accuracy on the basis of the determined behavior processes.

Furthermore, the transition of the processes of the behaviors is changed in the order of a first behavior process connected to attention and notice, a second behavior process connected to interest and curiosity, a third behavior process connected to a desire, a fourth behavior process connected to a comparison, and a fifth behavior process connected to a behavior.

It is possible to analyze a purchasing behavior exhibited by the person with more accuracy on the basis of the behavior processes as described above.

Furthermore, the information processing apparatus 10 specifies the number of persons who have left without purchasing the commodity product at each of the first behavior types in a case where it is specified that each of the plurality of tracked persons has left without purchasing the commodity product, and generates an image that indicates a proportion of persons who have left at each of the first behavior types based on the number of persons who have left at the first behavior type relative to the total number of the plurality of tracked persons. Specifically, the information processing apparatus 10 specifies the total number of the plurality of tracked persons in a predetermined period of time. The information processing apparatus 10 specifies the number of persons who have left at each of the first behavior type in the case where it is specified that each of the plurality of tracked persons has left without purchasing the commodity product. Then, the information processing apparatus 10 calculates a proportion of the persons who have left at each of the first behavior types on the basis of the number of persons who have left at the first behavior type relative to the total number of the plurality of tracked persons.

In this way, the information processing apparatus 10 accumulates and visualizes the leaving person at each of the purchasing behavior processes reached by the respective leaving persons. As a result, it is possible to analyze the purchasing behavior exhibited by the customer and make efficient use of the purchasing behavior to improve the conversion rate.

Furthermore, the information processing apparatus 10 stores, in an associated manner, attribute information on the tracked person and information on the process performed by the tracked person in a case where it is specified that the tracked person has left without purchasing the commodity product.

In this way, the information processing apparatus 10 stores, in an associated manner, the purchasing behavior process that is reached by the person who has been specified in the selling section area and the attribute information on the person. As a result, it is possible to make efficient use of the stored information to perform the behavior analysis of the leaving person when the person has ended up being a leaving person.

Furthermore, the information processing apparatus 10 trains a machine learning model that is used to detect a leaving person by using, as training data, at least one of the specified behavior exhibited by each of a purchaser who has purchased the commodity product and the leaving person who has left without purchasing the commodity product and attribute information on each of the purchaser and the leaving person.

In this way, the information processing apparatus 10 generates a detection model for detecting the leaving person. As a result, by inputting the behavior exhibited by the person specified in the selling section area or the attribute information on the person to the detection model, it is possible to estimate whether the person ends up being the purchaser or the leaving person, and make use of the obtained data to improve the conversion rate.

Furthermore, the information processing apparatus 10 specifies, based on a distance between the plurality of extracted persons, a group between the plurality of extracted persons.

In this way, the information processing apparatus 10 specifies a group between the persons who visit the store. As a result, the information on the plurality of persons who belong to the same group is stored in the attribute information on the persons as information on the accompanying persons each other and is able to be efficiently used.

### System

The flow of the processes, the control procedures, the specific names, and the information containing various kinds of data or parameters indicated in the above specification and drawings can be arbitrarily changed unless otherwise stated. Furthermore, specific examples, distributions, numerical values, and the like described in the embodiment are only examples and can be arbitrarily changed.

Furthermore, the specific shape of a separate or integrated device is not limited to the drawings. In other words, all or part of the device can be configured by functionally or physically separating or integrating any of the units in accordance with various loads or use conditions. In addition, all or any part of each of the processing functions performed by the each of the devices can be implemented by a CPU and by programs analyzed and executed by the CPU or implemented as hardware by wired logic.

### Hardware

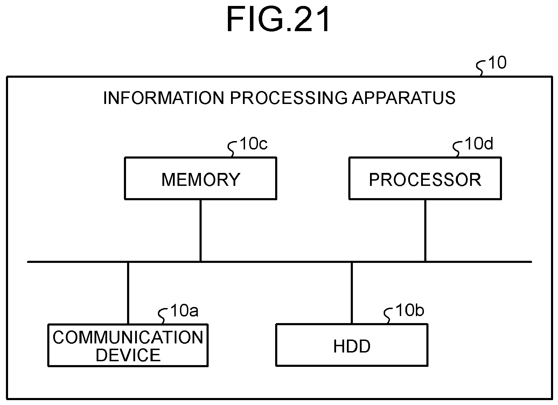

FIG. 21 is a diagram illustrating an example of a hardware configuration. As illustrated in FIG. 21, the information processing apparatus 10 includes a communication device 10a, a hard disk drive (HDD) 10b, a memory 10c, and a processor 10d. Furthermore, each of the units illustrated in FIG. 21 is connected each other via a bus or the like. Furthermore, FIG. 21 illustrates a hardware configuration of the information processing apparatus 10; however, a user terminal 100, a store clerk terminal 300, or the like may have the same configuration.

The communication device 10a is a network interface card or the like, and communicates with another server. The HDD 10b stores therein programs or the DB that operates the function illustrated in FIG. 2.

The processor 10d is a hardware circuit that operates the process that executes each of the functions described above in FIG. 2 or the like by reading the programs that execute the same process as that performed by each of the processing units illustrated in FIG. 2 from the HDD 10b or the like and loading the read programs in the memory 10c. In other words, the process executes the same function as that performed by each of the processing units included in the information processing apparatus 10. Specifically, the processor 10d reads, from the HDD 10b or the like, the programs having the same functions as those performed by the image capturing unit 21, the tracking unit 22, the skeleton detection unit 23, the motion recognition unit 24, the behavior determination unit 25, and the like. Then, the processor 10d executes the processes that executes the same processes as those performed by the image capturing unit 21 and the like.

In this way, the information processing apparatus 10 is operated as an information processing apparatus that executes an operation control process by reading and executing the programs that execute the same process as that performed by each of the processing units illustrated in FIG. 2. Furthermore, the information processing apparatus 10 is also able to implement the same function as that described above in the embodiment by reading the programs from a recording medium by a medium reading device and executing the read programs. In addition, the programs described in another embodiment are not limited to be executed by the information processing apparatus 10. For example, the present embodiment may also be similarly used in a case in which another computer or a server executes a program or in a case in which another computer and a server cooperatively execute the program with each other.

Furthermore, the programs that execute the same process as those performed by each of the processing units illustrated in FIG. 2 can be distributed via a network, such as the Internet. Furthermore, the programs can be executed by storing the programs in a recording medium that can be read by a computer readable medium, such as a hard disk, a flexible disk (FD), a CD-ROM, a magneto-optical disk (MO), a digital versatile disk (DVD), or the like, and read the programs from the recording medium by the computer.

## Claims

1. An information processing program that causes a computer (10) to execute a process comprising:
extracting a person from a video image in which a predetermined area in an inside of a store is captured;(S102)
tracking the extracted person by analyzing the video image;(S103)
specifying a behavior exhibited by the tracked person in the inside of the store by inputting the video image into a trained machine learning model;(S104)
specifying a first behavior type that is reached by the behavior exhibited by the tracked person from among a plurality of behavior types in each of which a transition of processes of the behaviors exhibited for a commodity product in the inside of the store is defined;(S105)
determining whether or not the tracked person has moved to outside a predetermined area; (S106) and
specifying, based on the first behavior type, when it is determined that the tracked person has moved to outside the predetermined area, (S106: Yes) whether the tracked person has purchased the commodity product or has left without purchasing the commodity product. (S107)

2. The information processing program according to claim 1, wherein the process further includes:
identifying a skeletal position of the tracked person by inputting the video of a first area in a store into the trained machine learning model; and
identifying the behavior that is performed by the tracked person with respect to the commodity product in the store based on the skeletal position relative to a position the product.

3. The information processing program according to claim 1, wherein the process further includes:
determining, when the person is situated in a first behavior process from among the plurality of behavior types in each of which the transition of the processes of the behaviors is defined, whether or not the person exhibits a behavior associated with a second behavior process that is a transition destination of the first behavior process; and
determining, when it is determined that the person has exhibited the behavior associated with the second behavior process, that the person has transitioned to the second behavior process.

4. The information processing program according to claim 1, wherein the transition of the processes of the behaviors is changed in the order of a first behavior process connected to attention and notice, a second behavior process connected to interest and curiosity, a third behavior process connected to a desire, a fourth behavior process connected to a comparison, and a fifth behavior process connected to a behavior.

5. The information processing program according to claim 1, wherein the process further includes:
specifying a number of persons who have left without purchasing the commodity product at each of the first behavior types in a case where it is specified that each of the plurality of tracked persons has left without purchasing the commodity product; and
generating an image that indicates a proportion of persons who have left at each of the first behavior types based on the number of persons who have left at the first behavior type relative to a total number of the plurality of tracked persons.

6. The information processing program according to claim 1, wherein the process further includes:
storing, in an associated manner, attribute information on the tracked person and information on the process performed by the tracked person in a case where it is specified that the tracked person has left without purchasing the commodity product.

7. The information processing program according to claim 1, wherein the process further includes:
training a machine learning model that is used to detect a leaving person by using, as training data, at least one of the specified behavior exhibited by each of a purchaser who has purchased the commodity product and the leaving person who has left without purchasing the commodity product and attribute information on each of the purchaser and the leaving person.

8. The information processing program according to claim 1, wherein the process further includes:
specifying, based on a distance between the plurality of extracted persons, a group between the plurality of extracted person.

9. An information processing method comprising:
extracting a person from a video image in which a predetermined area in an inside of a store is captured;(S102)
tracking the extracted person by analyzing the video; (S103)
specifying a behavior exhibited by the tracked person in the inside of the store by inputting the video into a trained machine learning model;(S104)
specifying a first behavior type that is reached by the behavior exhibited by the tracked person from among a plurality of behavior types in each of which a transition of processes of the behaviors for a commodity product in the inside of the store is defined;(S105)
determining whether or not the tracked person has moved to outside a predetermined area;(S106) and
specifying, based on the first behavior type, when it is determined that the tracked person has moved to outside the predetermined area, (S106: Yes) whether the tracked person has purchased the commodity product or has left without purchasing the commodity product.(S107)

10. An information processing apparatus (10) comprising:
a controller (20) configured to execute a process including:
extracting a person from a video image in which a predetermined area in an inside of a store is captured;(S102)
tracking the extracted person by analyzing the video image;(S103)
specifying a behavior exhibited by the tracked person in the inside of the store by inputting the video image into a trained machine learning model;(S104)
specifying a first behavior type that is reached by the behavior exhibited by the tracked person from among a plurality of behavior types in each of which a transition of processes of the behaviors for a commodity product in the inside of the store is defined;(S105)
determining whether or not the tracked person has moved to outside a predetermined area;(S106) and
specifying, based on the first behavior type, when it is determined that the tracked person has moved to outside the predetermined area, (S106: Yes) whether the tracked person has purchased the commodity product or has left without purchasing the commodity product.(S107)
